# EUROPÄISCHE PATENTSCHRIFT

(11) **EP 4 035 534 B1**
(45) Veröffentlichungstag und Bekanntmachung des Hinweises auf die Patenterteilung: **15.11.2023**
(21) Anmeldenummer: 22152856.5
(22) Anmeldetag: 24.01.2022
(51) Int. Cl.: A22C 17/00

(54) **MASCHINE ZUM VERARBEITEN UND/ODER HERSTELLEN VON LEBENSMITTELN**
MACHINE FOR PRODUCING AND/OR PROCESSING FOOD
MACHINE À TRAITER ET/OU À FABRIQUER DES DENRÉES ALIMENTAIRES

(30) Priorität: 02.02.2021 DE 102021000490
(43) Veröffentlichungstag der Anmeldung: 03.08.2022
(73) Patentinhaber: Rühle GmbH, 79865 Grafenhausen (DE)
(72) Erfinder: Rühle, Claus, 79859 Schluchsee (DE)
(74) Vertreter: Huwer, Andreas

(56) Entgegenhaltungen:
- EP-A1- 3 315 219
- CN-C- 1 295 062
- US-B2- 7 658 135

## Beschreibung

Die Erfindung betrifft eine Maschine zum Verarbeiten und/oder Herstellen von Lebensmitteln, mit einem Maschinengehäuse und mit Maschinenfüßen zum Aufstellen der Maschine auf dem Fußboden eines Raumes, wobei das Maschinengehäuse eine Bodenplatte und Seitenwände aufweist, die eine Innenhöhlung begrenzen, in der elektrische und/oder mechanische Maschinenkomponenten angeordnet sind, wobei die Maschinenfüße derart mit der Bodenplatte des Maschinengehäuses verbunden sind, dass diese durch einen Zwischenraum vom Fußboden beabstandet ist, wenn die Maschine auf dem Fußboden aufgestellt ist.

Derartige Maschinen sind zum Beispiel aus der US 7 658 135 B2 bekannt, und aus einem Produktkatalog der Anmelderin aus dem Jahr 2019 mit dem Titel "Echte Kraftpakete - sie werden sie lieben" bekannt und werden von der Anmelderin mit großem Erfolg vertrieben. Sie können beispielsweise als Schneidemaschine, insbesondere Streifen- und Würfelschneider für Fleisch, Wurst, Käse, Gemüse oder dergleichen Lebensmittel, als Gefrierfleischschneider, als Pökelmaschine oder als Misch- und Tumblemaschine ausgestaltet sein. Die Maschinen werden u.a. in Lebensmittel-Produktions- und Verarbeitungsbetrieben sowie in Metzgereien verwendet.

Das Maschinengehäuse der vorbekannten Maschinen hat eine Bodenplatte und Begrenzungswände, welche die Innenhöhlung vor dem Eindringen von Schmutz und Feuchtigkeit schützen. Üblicherweise sind an dem Maschinengehäuse Maschinenfüße vorgesehen, die derart ausgestaltet sind, dass die Bodenplatte in etwa 10 cm über dem Fußboden angeordnet ist. Hierdurch kann der Fußboden unter der Maschine auf einfache Weise beispielsweise mit Hilfe eines Hochdruckreinigers gereinigt werden, ohne die Maschine von ihrem Standort zu entfernen. Nachteilig ist dabei jedoch, dass die Unterseite der Bodenplatte wegen ihres geringen Abstands zum Fußboden beim Reinigen nur schwer zugänglich ist. Auch wenn eine Reinigung der Bodenunterseite theoretisch möglich ist, wird sie wegen des hohen Arbeitsaufwands meist nicht gemacht. Auf diese Weise sammeln sich schon nach kurzer Zeit Reste aus verklebten Fleischresten und anderen Verunreinigungen dort an. Dies ist, gerade im Bereich der Lebensmitteltechnik, ein großes Hygieneproblem. Natürlich wäre es möglich, die Maschine mittels eines Hebezeugs anzuheben, doch -aufgrund des Maschinengewichts und der Größe- können viele Maschinen aus Sicherheitsgründen nicht einfach problemlos angehoben werden, um sie zu reinigen. Die Gefahr einer Verschmutzung des Maschinenbodens könnte zwar auch dadurch reduziert werden, dass höhere Maschinenfüße an dem Maschinengehäuse angebracht werden, so dass die Bodenplatte des Maschinengehäuses dann in einem größeren Abstand zum Fußboden angeordnet wäre. Da hätte aber den Nachteil, dass der Raum über dem Fußboden nicht oder nur schlecht für die Maschine genutzt werden könnte.

Es besteht deshalb die Aufgabe, eine Maschine der eingangs genannten Art zu schaffen, bei welcher eine Verschmutzung der Bodenplatte des Maschinengehäuses auf einfache Weise auch dann vermieden werden kann, wenn die Bodenplatte dicht über dem Fußboden angeordnet ist, beispielsweise in einem Abstand von etwa 10 cm.

Erfindungsgemäß wird diese Aufgabe mit den Merkmalen des Patentanspruchs 1 gelöst. Diese sehen bei einer Maschine der eingangs genannten Art vor, dass die Maschine an der der Innenhöhlung des Maschinengehäuses abgewandten Unterseite der Bodenplatte eine lösbar mit dem Maschinengehäuse verbindbare Abdeckplatte aufweist, welche die Unterseite der Bodenplatte flächig abdeckt, wenn sie mit dem Maschinengehäuse verbunden ist.

Während des Betriebs der Maschine und bei der Reinigung des unter der Maschine befindlichen Fußbodens beispielsweise durch Abspritzen mit einem Hochdruckreiniger ist die Abdeckplatte unter dem Bodenplatte montiert, so dass eventuelle Verschmutzungen, die von unten gegen die Maschine spritzen, zwar mit der Abdeckplatte, nicht aber den durch diese abgedeckten Bereichen der Unterseite der Bodenplatte in Kontakt geraten können. Um die Maschine an ihrer Unterseite zu reinigen, wird die Abdeckplatte von der Bodenplatte entfernt, so dass sie auf einfache Weise getrennt von der Maschine gereinigt werden kann, beispielsweise durch Abspritzen mit Wasser, durch Eintauchen in eine Reinigungsflüssigkeit und/oder durch Spülen in einer Spülmaschine. Vorzugsweise wird die Abdeckplatte nach dem Inkontaktbringen mit der Reinigungsflüssigkeit zunächst getrocknet, beispielsweise in dem die Reinigungsflüssigkeit mit einem Gummiabzieher von der Abdeckplatte entfernt wird oder diese einfach so angeordnet wird, dass das Wasser bzw. die Reinigungsflüssigkeit von ihr abläuft. Nach der Reinigung wird die Abdeckplatte wieder an der Bodenplatte bzw. am Maschinengehäuse montiert. Die Abdeckplatte ist bevorzugt derart an die Bodenplatte des Maschinengehäuses angepasst, dass sie zumindest den überwiegenden Teil der Unterseite der Bodenplatte abdeckt, insbesondere mindestens 80%, gegebenenfalls mindestens 90% und bevorzugt mindestens 95% der Unterseite der Bodenplatte. In dem relativ keinen, nicht durch die Abdeckplatte abgedeckten Teil der Bodenplatte können die Maschinenfüße angeordnet sein.

Erwähnt werden soll noch, dass die Abdeckplatte relativ kostengünstig ersetzt werden kann, sollte sie beschädigt sein oder nicht mehr den Hygienevorschriften entsprechen. Damit die Maschine nach dem Reinigen möglichst schnell wieder in Betrieb genommen werden kann, kann die Maschine zwei Abdeckplatten aufweisen, die wechselweise an der Bodenplatte montiert werden können. Dann kann die Maschine beim Reinigen bzw. Trocknen der einen Abdeckplatte mit der jeweils anderen Abdeckplatte weiterbetrieben werden. Die Abdeckplatte besteht vorzugsweise aus einem leicht zu reinigenden Kunststoff.

Bei einer Weiterbildung der Erfindung hat die Maschine einen Sensor zum Detektieren der Montagestellung der Abdeckplatte, der derart mit einem Antriebsmotor der Maschine in Steuerverbindung steht, dass der Betrieb des Antriebsmotors gesperrt ist, wenn die Abdeckplatte nicht in der Montagestellung angeordnet ist. Die Maschine kann dann nur betrieben werden, wenn die Bodenplatte durch die Abdeckplatte vor Verschmutzung geschützt ist.

Bei einer bevorzugten Ausgestaltung der Erfindung kommt die Abdeckplatte flächig an der Unterseite der Bodenplatte zur Anlage, wenn die Abdeckplatte mit dem Maschinengehäuse verbunden ist. Hierdurch wird die Bodenplatte noch besser vor Verschmutzung geschützt. Es sind aber auch andere Ausgestaltungen denkbar, bei denen die Abdeckplatte in geringem Abstand zur Bodenplatte montiert sein kann, beispielsweise in maximal 5 mm, ggf. maximal 3 und bevorzugt maximal 1 mm Abstand zur Bodenplatte. Auch hierbei wird die Bodenplatte wirksam vor Verschmutzung an ihrer Unterseite geschützt, insbesondere wenn der Zwischenraum zwischen der Abdeckplatte und der Bodenplatte durch eine Dichtlippe oder dergleichen Dichtung nach außen hin abgedichtet ist.

Bei einer vorteilhaften Ausführungsform der Maschine ist die Abdeckplatte mittels einer Schiebeführung zwischen einer Montagestellung, in der die Abdeckplatte die Unterseite der Bodenplatte abdeckt, und einer Vormontagestellung, in der die Abdeckplatte die Unterseite der Bodenplatte freigibt, parallel zur Erstreckungsebene der Bodenplatte relativ zu dieser verschiebbar. Dies ermöglich eine einfache und schnelle Montage der Abdeckplatte an bzw. eine Demontage der Abdeckplatte von der Bodenplatte.

Bei einer zweckmäßigen Ausgestaltung der Erfindung ist an einem Randbereich der Abdeckplatte, der sich quer zur Schieberichtung der Schiebeführung erstreckt, ein Handgriff angebracht, der in Montagestellung der Abdeckplatte oberhalb der Abdeckplatte an einer der Innenhöhlung abgewandten Außenfläche einer Seitenwand des Maschinengehäuses positioniert ist. Somit kann die Abdeckplatte an dem Handgriff ergriffen und auch einfache Weise aus der Schiebeführung herausgezogen oder in diese hineingeschoben werden. Wenn die Abdeckplatte an der Bodenplatte montiert ist, ist der Handgriff an der Seitenwand des Maschinengehäuses angeordnet, wo er vor Beschädigung geschützt ist. Mittels des Handgriffs, kann die von der Bodenplatte getrennte Abdeckplatte senkrecht aufgehängt werden, so dass eine schnelle Trocknung möglich ist. Der Handgriff weist bevorzugt eine Öffnung für den Durchtritt der Finger einer menschlichen Hand auf.

Vorteilhaft ist, wenn an der Seitenwand des Maschinengehäuses, an welcher der Handgriff in Montagestellung der Abdeckplatte positioniert ist, ein Rastelement angeordnet ist, das in Montagestellung der Abdeckplatte mit dem Handgriff verrastet ist. Der Handgriff ist bevorzugt etwa mittig an einem dazu benachbarten Randbereich der Abdeckplatte angeordnet. Durch den in Montagestellung mit dem Rastelement verrasteten Handgriff wird Abdeckplatte einerseits gegen versehentliches Verschieben in der Führungsschiene gesichert und andererseits wird vermieden, dass sich die Abdeckplatte zwischen den Führungen der Schiebeführung nach unten durchbiegt. Bei Bedarf kann an dem vom Handgriff entfernten, gegenüberliegenden Randbereich der Abdeckplatte eine Stützstelle vorgesehen sein, die mit einem an der Bodenplatte angeordneten Stützelement zusammenwirkt, wenn die Abdeckplatte in der Montagestellung angeordnet ist.

Bei einer Weiterbildung der Erfindung hat die Schiebführung zwei parallel zueinander beabstandete, in Schiebrichtung verlaufende Führungen, zwischen denen die Abdeckplatte in Montagestellung quer zur Schieberichtung formschlüssig gehalten ist, wobei jede dieser Führungen jeweils eine Reihe mit mehreren, vorzugsweise pilzförmig ausgestalteten Führungselementen aufweist, die in Schiebrichtung zueinander beabstandet sind, wobei die Führungselemente jeweils einen mit der Bodenplatte verbunden Schaft und an ihrem von der Bodenplatte entfernten Ende einen in Richtung auf die jeweils gegenüberliegende Führung vorstehenden Vorsprung haben, an dem die Abdeckplatte in Montagestellung zur Auflage kommt. Die Führungen lassen sich dann bei Bedarf relativ leicht reinigen, da sie von der zu ihnen benachbarten Seitenwand des Maschinengehäuses aus zugänglich sind.

Bei einer vorteilhaften Ausführungsform der Erfindung ist mindestens ein Maschinenfuß, vorzugsweise sind alle Maschinenfüße, an einer Trägerplatte angeordnet ist, die einen ersten, mit dem Maschinengehäuse verbunden Randbereich und einen zweiten Randbereich aufweist, der unterhalb der Unterseite der Bodenplatte angeordnet und durch einen Schlitz von dieser beabstandet ist, wobei die Abdeckplatte in Montagestellung in den Schlitz eingreift. Somit deckt die in Montagestellung befindliche Abdeckplatte die Unterseite der Bodenplatte sogar im Bereich der Maschinenfüße bis fast an die parallel zur Schieberichtung der Schiebführung verlaufenden Ränder der Bodenplatte ab.

Bei einer zweckmäßigen Ausgestaltung der Erfindung sind an den Maschinenfüßen Rollen und/oder Lenkrollen angebracht. Die Maschine kann dann auf dem Fußboden auf einfache Weise rangiert und verschoben werden.

Nachstehend ist ein Ausführungsbeispiel der Erfindung anhand der Zeichnung näher erläutert. Es zeigt
- Fig. 1: eine perspektivische Ansicht auf die Schmalseite einer Maschine zum Verarbeiten und/oder Herstellen von Lebensmitteln,
- Fig. 2: eine perspektivische Ansicht auf die Unterseite der Maschine, wobei eine Abdeckplatte in Montagestellung angeordnet ist,
- Fig. 3: eine perspektivische Ansicht auf die Unterseite der Maschine, wobei die Abdeckplatte teilweise aus einer Schiebeführung herausgezogen ist,
- Fig. 4: eine Seitenansicht auf die Breitseite der Maschine,
- Fig. 5: eine Aufsicht auf die Unterseite der Maschine,
- Fig. 6: eine perspektivische Seitenansicht der Maschine, wobei die Abdeckplatte teilweise aus der Schiebeführung herausgezogen ist,
- Fig. 7: eine Darstellung ähnlich Fig. 6, wobei jedoch die Abdeckplatte in einer Vormontagestellung angeordnet ist, in der sie vollständig aus der Schiebeführung herausgezogen ist,
- Fig. 8: eine Aufsicht auf die Unterseite der Abdeckplatte,
- Fig. 9: eine Stirnseite der Abdeckplatte, an der ein Handgriff angeordnet ist,
- Fig. 10: einen vergrößerten Ausschnitt aus Fig. 2, welcher einen Handgriff zeigt, und
- Fig. 11: einen vergrößerten Ausschnitt aus Fig. 2, auf dem Führungselemente der Schiebeführung zu sehen sind.

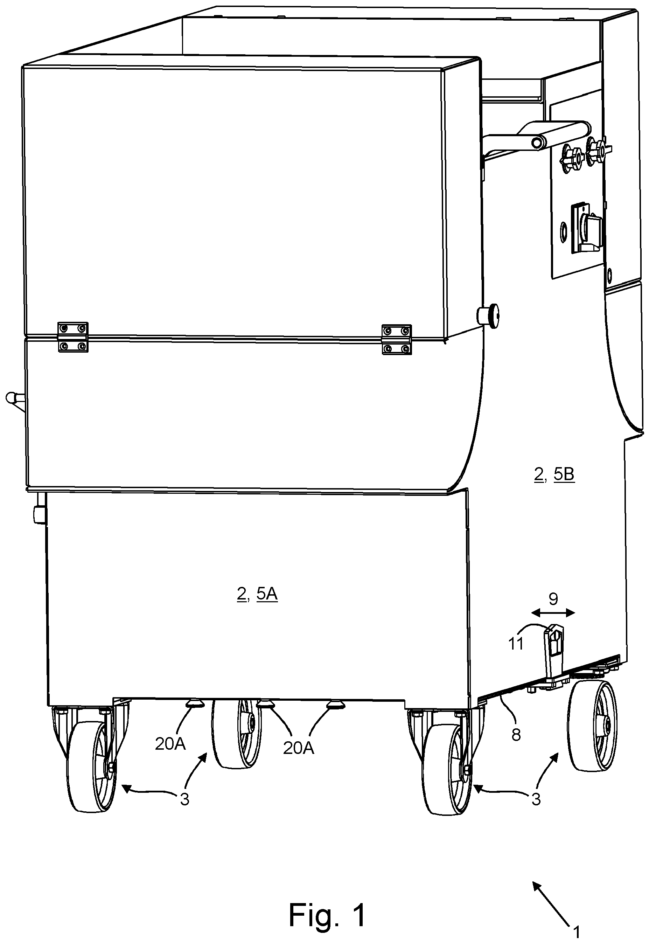

Eine in Fig. 1 insgesamt mit 1 bezeichnete, als Streifen- und Würfelschneider ausgestaltete Maschine zum Verarbeiten und/oder Herstellen von Lebensmitteln hat ein Maschinengehäuse 2 und Maschinenfüße 3, die zum Aufstellen der Maschine 1 auf dem Fußboden 4 eines Raumes vorgesehen sind. Wie in Fig. 1, 2 und 3 zu sehen ist, hat das Maschinengehäuse Seitenwände 5A, 5B, 5C und eine Bodenplatte 6. Die Seitenwände 5A, 5B, 5C und die Bodenplatte 6 begrenzen eine in der Zeichnung nicht näher dargestellte Innenhöhlung, in der elektrische und mechanische Maschinenkomponenten angeordnet sind, unter anderem ein Antriebsmotor für ein Schneidgatter, mit dem Lebensmittel in an sich bekannter Weise in Streifen bzw. Würfel geschnitten werden können. Durch die Bodenplatte 6 und die Seitenwände 5A, 5B, 5C ist die Innenhöhlung vor dem Eindringen von Staub und Spritzwasser geschützt.

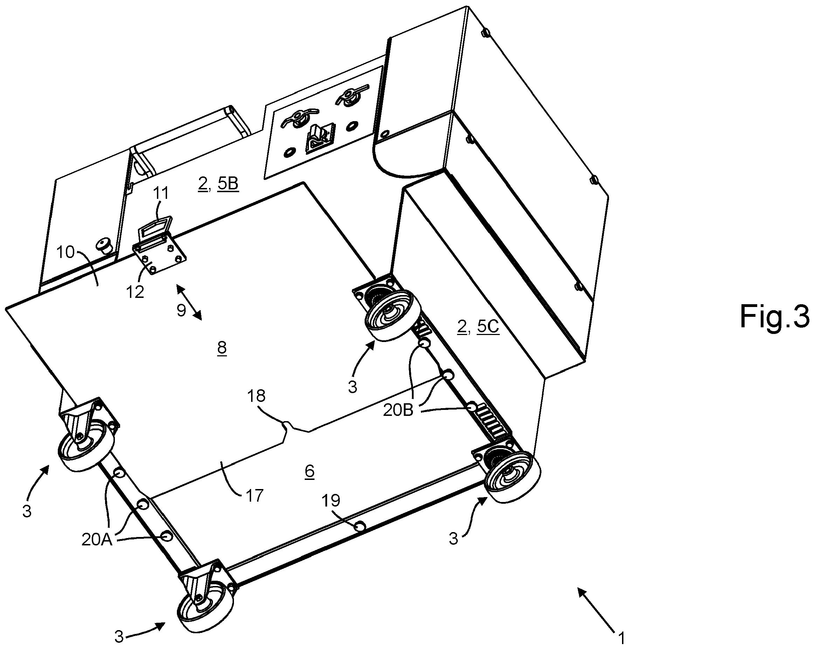

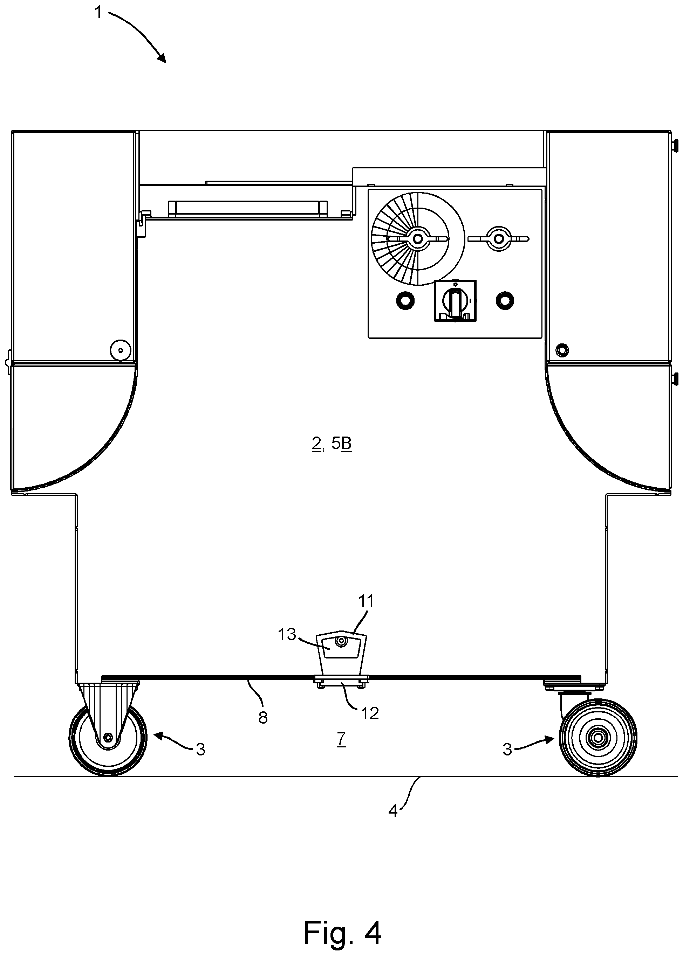

Wie in Fig. 3 und 4 zu sehen ist, sind die Maschinenfüße 3 derart mit der Bodenplatte 6 des Maschinengehäuses 2 verbunden, dass die Bodenplatte 6 durch einen Zwischenraum 7 vom Fußboden 4 beabstandet ist, wenn die Maschine 1 auf dem Fußboden 4 aufgestellt ist. Der vertikale Abstand zwischen der Bodenplatte 6 und dem Fußboden 4 beträgt etwa 10 cm.

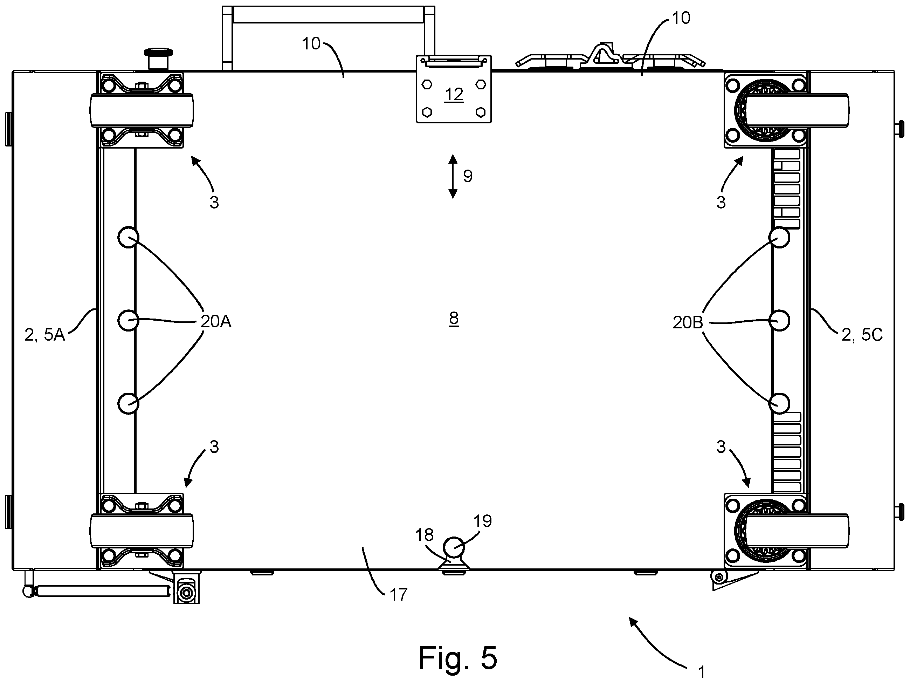

Wie in Fig. 5 bis 7 erkennbar ist, hat die Maschine 1 an der der Innenhöhlung des Maschinengehäuses 2 abgewandten Unterseite der Bodenplatte 6 eine lösbar mit dem Maschinengehäuse 2 verbindbare Abdeckplatte 8, welche die Unterseite der Bodenplatte 6 flächig abdeckt, wenn sie mit dem Maschinengehäuse 2 verbunden ist. Die Abdeckplatte 8 ist wasser- und staubdicht und besteht aus einem Material, das sich leicht reinigen lässt, vorzugsweise aus Kunststoff. Die Bodenplatte 6 ist ebenfalls wasser- und staubdicht und besteht vorzugsweise aus Edelstahl.

Während des Betriebs der Maschine 1 und bei der Reinigung des Fußbodens 4 ist die Abdeckplatte 8 am Maschinengehäuse 2 montiert, so dass eventuelle Verschmutzungen, die von unten gegen die Maschine 1 spritzen, an den Stellen, an denen die Abdeckplatte 8 die Bodenplatte 6 abdeckt, nicht mit der Bodenplatte 6 in Kontakt geraten können.

Um die Maschine 1 an ihrer Unterseite zu reinigen, wird die Abdeckplatte 8 von der Bodenplatte 6 entfernt und danach getrennt von der Maschine 1 gereinigt, beispielsweis durch Abwaschen oder Abspritzen mit Wasser. Nachdem die Abdeckplatte 8 getrocknet wurde, wird sie wieder an der Bodenplatte 6 bzw. am Maschinengehäuse 2 montiert und in die in Fig. 5 gezeigte Montagestellung gebracht, in der die Abdeckplatte 8 vollständig unterhalb der Bodenplatte 6 und parallel zu dieser angeordnet ist. In der Montagestellung liegt die Abdeckplatte 8 vorzugsweise direkt an der Unterseite der Bodenplatte an oder ist in einem Abstand von wenigen Millimetern zur Unterseite der Bodenplatte 6 positioniert.

Zum Detektieren der Montagestellung der Abdeckplatte 8 ist an dem Maschinengehäuse 2 ein in der Zeichnung nicht näher dargestellter Sensor, wie zum Beispiel ein Taster vorgesehen, der derart mit dem Antriebsmotor der Maschine 1 in Steuerverbindung steht, dass der Betrieb des Antriebsmotors gesperrt ist, wenn die Abdeckplatte 8 nicht in der Montagestellung angeordnet ist. Die Maschine kann also nur betrieben werden, wenn sich die Abdeckplatte 8 in der Montagestellung befindet.

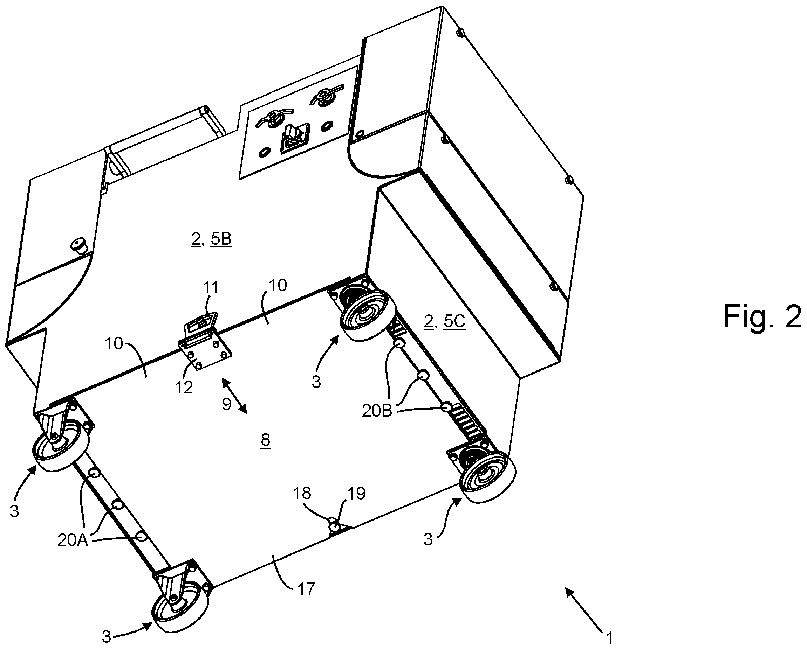

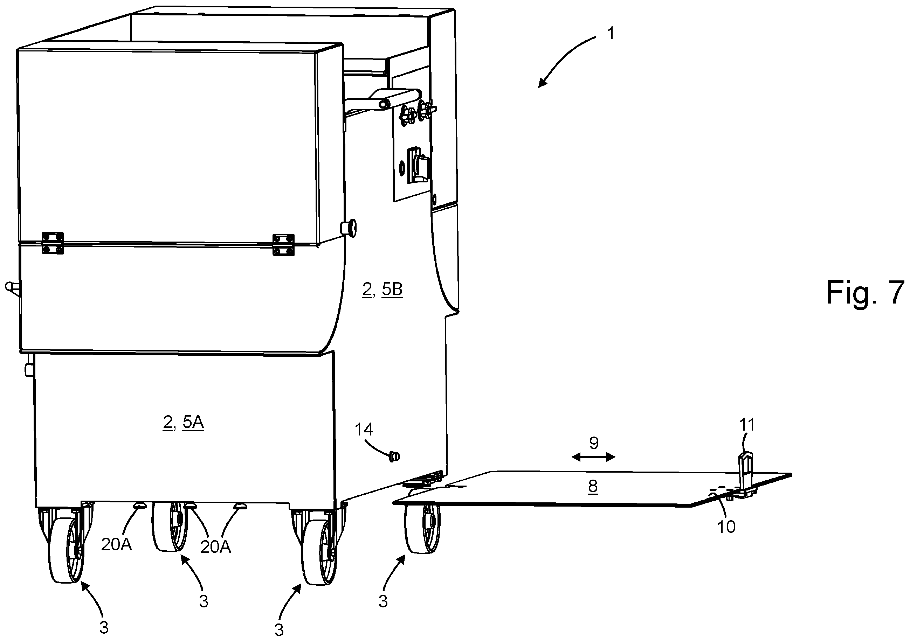

Um eine einfache und schnelle Montage und Demontage der Abdeckplatte 8 am Maschinengehäuse 2 zu ermöglichen, ist die Abdeckplatte 8 mittels einer an dem Maschinengehäuse 2 vorgesehenen Schiebeführung zwischen der Montagestellung (Fig. 2 und 5) und der Vormontagestellung (Fig. 7) parallel zu der von der Bodenplatte 6 aufgespannten Ebene in eine Schieberichtung 9 verschiebbar.

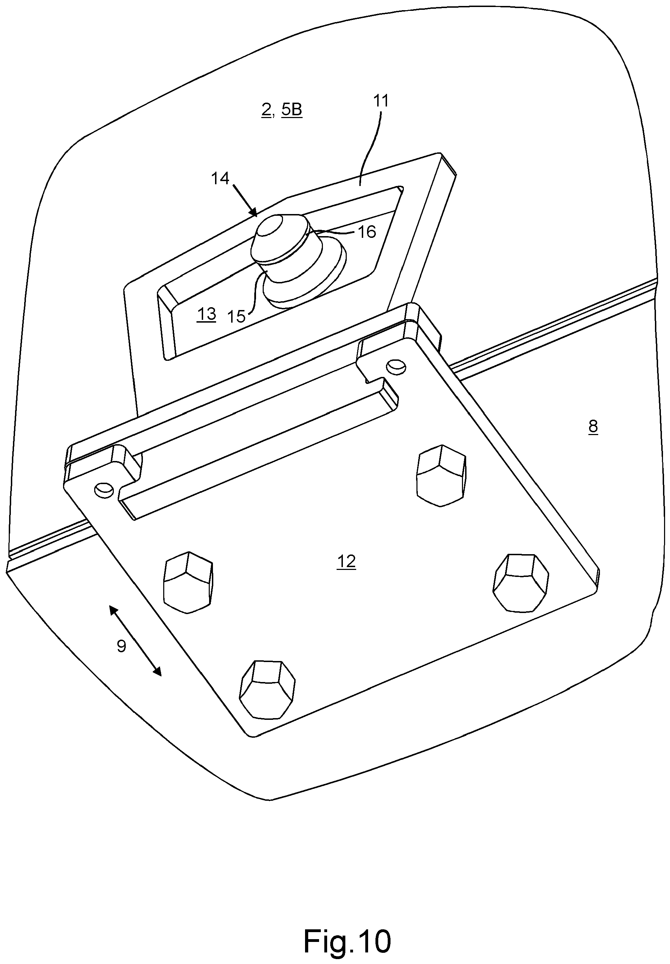

Wie in Fig. 3, und 6 bis 9 zu sehen ist, ist an einem Randbereich 10 der Abdeckplatte 8, der sich quer zur Schieberichtung 9 der Schiebeführung erstreckt, ein Handgriff 11 angebracht ist, der in Montagestellung der Abdeckplatte 8 oberhalb der Abdeckplatte 8 an einer der Innenhöhlung abgewandten Außenfläche der Seitenwand 5B des Maschinengehäuses 2 positioniert ist (Fig. 10). An dem Handgriff 11 ist eine Halteplatte 12 angeordnet, die etwa winkelförmig mit dem Handgriff 11 verbunden ist und mit Hilfe von Befestigungselementen, wie Schrauben oder Nieten an der Abdeckplatte 8 befestigt ist.

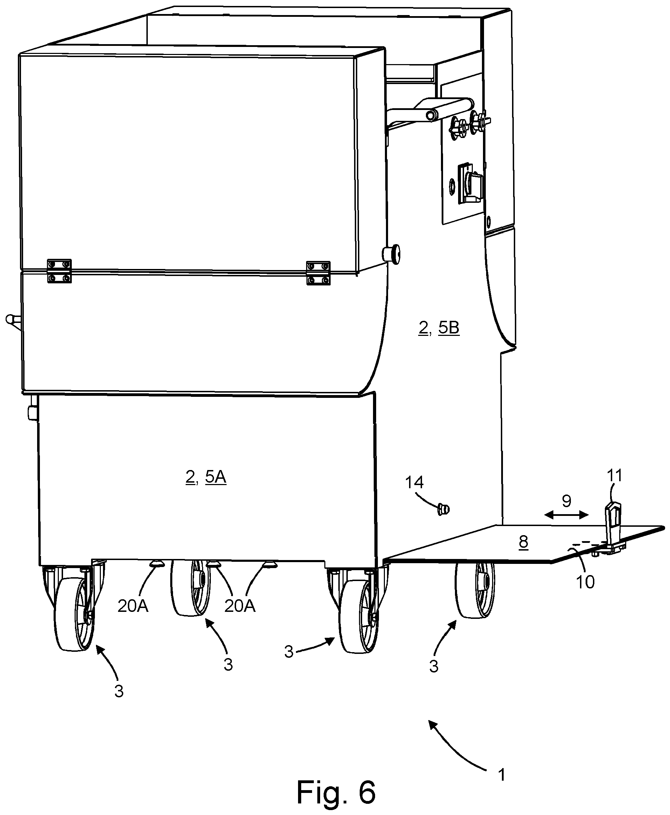

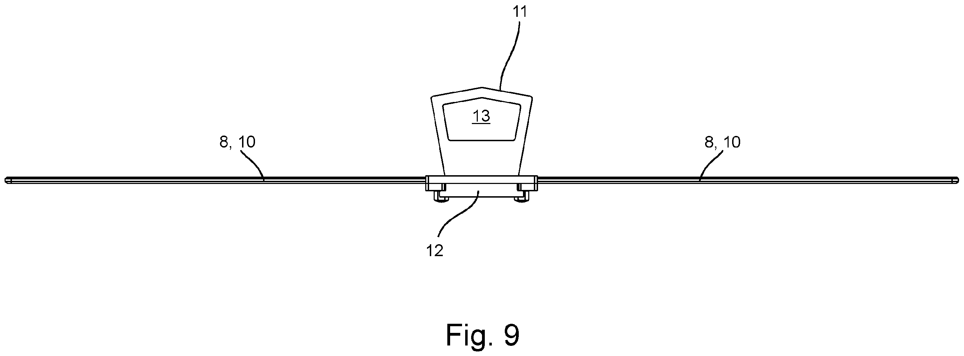

Wie in Fig. 9 zu sehen ist, hat der Handgriff 11 eine Öffnung 13 zum Durchgreifen mit den Fingern einer menschlichen Hand. Die von der Öffnung 13 aufgespannte Ebene ist quer zur Erstreckungsebene der Abdeckplatte 8 angeordnet. Wenn sich die Abdeckplatte 8 in der Montagestellung befindet, ist die von der Öffnung 13 aufgespannte Ebene etwa parallel zu der Ebene angeordnet, in der sich die Seitenwand 5B erstreckt (Fig. 6 und 7).

An der Seitenwand 5B des Maschinengehäuses 2, an welcher der Handgriff 11 in Montagestellung der Abdeckplatte 8 positioniert ist, ist ein Rastelement 14 angeordnet, das in Montagestellung der Abdeckplatte 8 mit dem Handgriff 11 verrastet ist (Fig. 1, 2 und 10). Das Rastelement hat einen Schaft 15, der an seinem einen Ende eine radiale Verbreiterung 16 und eine daran angeordnete Einführschräge für den die Öffnung 13 umgrenzenden Rand des Handgriffs 11 aufweist. An seinem von der Verbreiterung 16 entfernten anderen Ende ist der Schaft 15 mit der Seitenwand 5B des Maschinengehäuses 2 verbunden. Wenn die Abdeckplatte 8 in der Montagestellung angeordnet ist, kommt der die Öffnung 13 umgrenzenden Rand des Handgriffs 11 zwischen der Verbreiterung 16 und der Seitenwand 5B an der Mantelfläche des Schafts zur Auflage. Zum Verschieben der in Montagestellung befindlichen Abdeckplatte 8 in die Vormontagestellung wird der die Öffnung 13 umgrenzende Rand des Handgriffs 11 bis über die Verbreiterung 16 angehoben und die Abdeckplatte 8 danach aus der Schiebeführung herausgezogen.

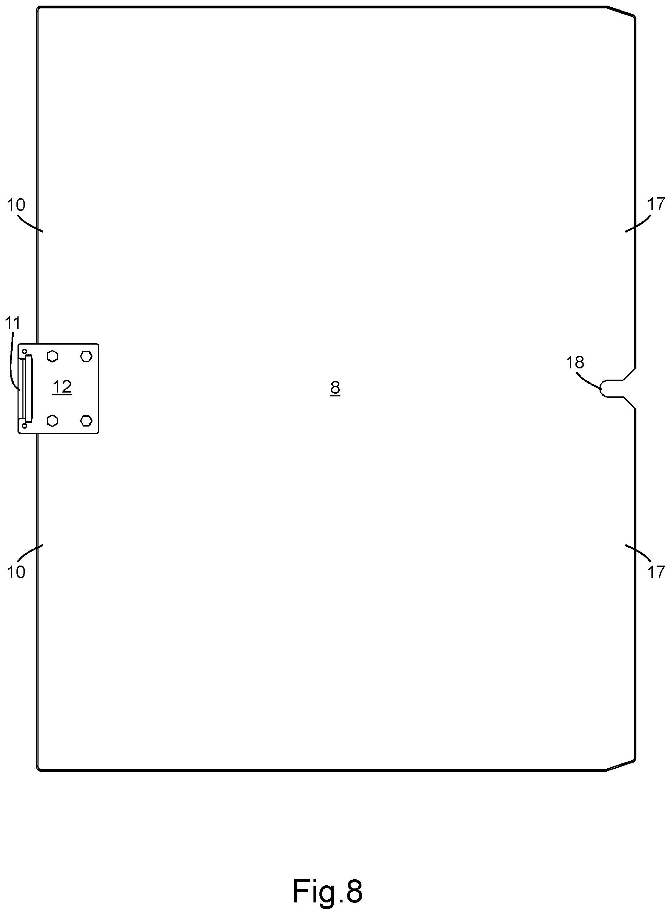

An ihrem von dem Handgriff 11 entfernten, gegenüberliegenden Randbereich 17 hat die Abdeckplatte 8 eine Stützstelle 18, die mit einem an der Bodenplatte 6 angeordneten Stützelement 19 zusammenwirkt, wenn die Abdeckplatte 8 in der Montagestellung angeordnet ist. Wie in Fig.8 zu sehen ist, ist die Stützstelle 18 als randoffene Aussparung der Abdeckplatte 8 ausgestaltet.

Das Stützelement 19 ist im Wesentlichen pilzförmig ausgestaltet und weist ein mit der Bodenplatte verbundenes Schaftteil auf, das bei in Montagestellung befindlicher Abdeckplatte 8 in die randoffene Aussparung der Stützstelle 18 eingreift. An seinem von der Bodenplatte entfernten Ende ist das Schaftteil mit einem etwa pilzkopfförmigen Kopfteil verbunden, an dem die Abdeckplatte 8 mit ihrer Stützstelle 18 abgestützt ist, wenn sich die Abdeckplatte 8 in Montagestellung befindet.

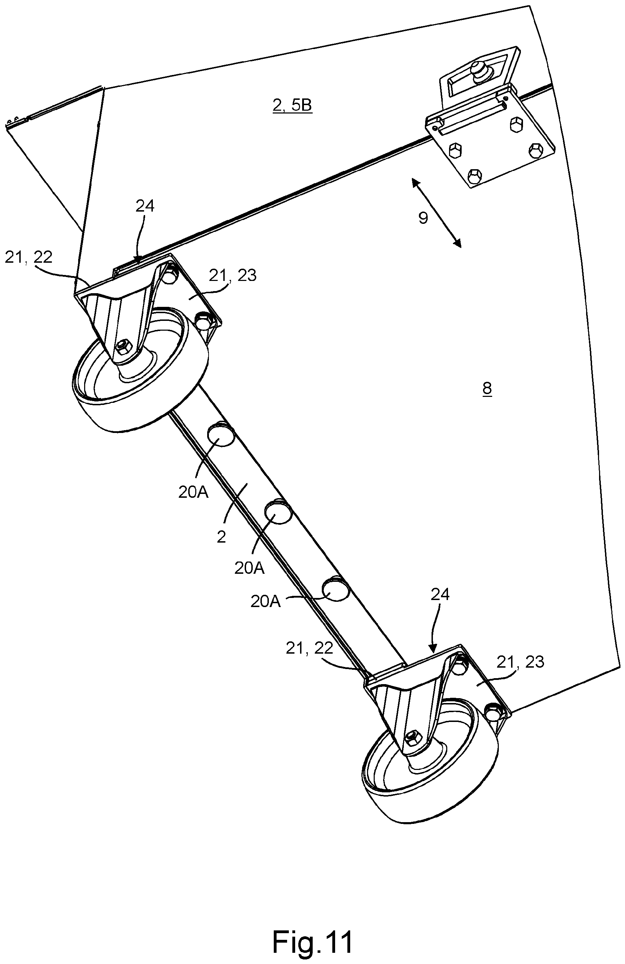

Wie in den Fig. 3 und 11 zu sehen ist, hat die Schiebführung an der Bodenplatte 6 zwei parallel zueinander beabstandete, in Schiebrichtung verlaufende Führungen 20A, 20B, zwischen denen die Abdeckplatte 8 in Montagestellung quer zur Schieberichtung 9 formschlüssig gehalten ist. Jede dieser Führungen 20A, 20B hat jeweils eine Reihe mit mehreren etwa pilzförmig ausgestalteten Führungselementen, die in Schiebrichtung 9 zueinander beabstandet sind. Die Führungselemente haben jeweils einen mit der Bodenplatte 6 verbunden Schaft und an ihrem von der Bodenplatte 6 entfernten Ende einen etwa pilzkopfförmigen, gegenüber dem Schaft verbreiterten Kopf, der einen in Richtung auf die jeweils gegenüberliegende Führung 20B, 20A vorstehenden Vorsprung bildet. An den Vorsprüngen kommt die Abdeckplatte 8 zur Auflage, wenn sie zwischen den Führungen 20B, 20A angeordnet ist.

Die Maschinenfüße 3 sind als Rollen oder Lenkrollen ausgestaltet, auf denen die Maschine 1 verfahrbar ist. Jeder Maschinenfuß 3 ist jeweils an einer Trägerplatte 21 angeordnet, die einen ersten, mit dem Maschinengehäuse 2 verbunden Randbereich 22 und einen zweiten Randbereich 23 aufweist, der unterhalb der Unterseite der Bodenplatte 6 angeordnet ist. Der zweite Randbereich 23 jeder Trägerplatte 21 ist jeweils durch einen Schlitz 24 von der Bodenplatte 6 beabstandet. In den Schlitz 24 greift die Abdeckplatte 8 in Montagestellung mit einem Randbereich ein.

## Patentansprüche

1. Maschine (1) zum Verarbeiten und/oder Herstellen von Lebensmitteln, mit einem Maschinengehäuse (2) und mit Maschinenfüßen (3) zum Aufstellen der Maschine (1) auf dem Fußboden (4) eines Raumes, wobei das Maschinengehäuse (2) eine Bodenplatte (6) und Seitenwände (5A, 5B, 5C) aufweist, die eine Innenhöhlung begrenzen, in der elektrische und/oder mechanische Maschinenkomponenten angeordnet sind, wobei die Maschinenfüße (3) derart mit der Bodenplatte (6) des Maschinengehäuses (2) verbunden sind, dass diese durch einen Zwischenraum (7) vom Fußboden (4) beabstandet ist, wenn die Maschine (1) auf dem Fußboden (4) aufgestellt ist, **dadurch gekennzeichnet, dass** die Maschine (1) an der der Innenhöhlung des Maschinengehäuses (2) abgewandten Unterseite der Bodenplatte (6) eine lösbar mit dem Maschinengehäuse (2) verbindbare Abdeckplatte (8) aufweist, welche die Unterseite der Bodenplatte (6) flächig abdeckt, wenn sie mit dem Maschinengehäuse (2) verbunden ist.

2. Maschine (1) nach Anspruch 1, **dadurch gekennzeichnet, dass** die Maschine (1) einen Sensor zum Detektieren der Montagestellung der Abdeckplatte (8) hat, und dass der Sensor derart mit einem Antriebsmotor der Maschine (1) in Steuerverbindung steht, dass der Betrieb des Antriebsmotors gesperrt ist, wenn die Abdeckplatte (8) nicht in der Montagestellung angeordnet ist.

3. Maschine (1) nach Anspruch 1 oder 2, **dadurch gekennzeichnet, dass** die Abdeckplatte (8) flächig an der Unterseite der Bodenplatte (6) zur Anlage kommt, wenn die Abdeckplatte (8) mit dem Maschinengehäuse (2) verbunden ist.

4. Maschine (1) nach einem der Ansprüche 1 bis 3, **dadurch gekennzeichnet, dass** die Abdeckplatte (8) mittels einer Schiebeführung zwischen einer Montagestellung, in der die Abdeckplatte (8) die Unterseite der Bodenplatte (6) abdeckt, und einer Vormontagestellung, in der die Abdeckplatte (8) die Unterseite der Bodenplatte (6) freigibt, parallel zur Erstreckungsebene der Bodenplatte (6) relativ zu dieser verschiebbar ist.

5. Maschine (1) nach Anspruch 4, **dadurch gekennzeichnet, dass** an einem Randbereich (10) der Abdeckplatte (8), der sich quer zur Schieberichtung (9) der Schiebeführung erstreckt, ein Handgriff (11) angebracht ist, der in Montagestellung der Abdeckplatte (8) oberhalb der Abdeckplatte (8) an einer der Innenhöhlung abgewandten Außenfläche einer Seitenwand (5B) des Maschinengehäuses (2) positioniert ist.

6. Maschine (1) nach Anspruch 5, **dadurch gekennzeichnet, dass** an der Seitenwand (5B) des Maschinengehäuses (2), an welcher der Handgriff (11) in Montagestellung der Abdeckplatte (8) positioniert ist, ein Rastelement (14) angeordnet ist, das in Montagestellung der Abdeckplatte (8) mit dem Handgriff (11) verrastet ist.

7. Maschine (1) nach einem der Ansprüche 4 bis 6, **dadurch gekennzeichnet, dass** die Schiebführung zwei parallel zueinander beabstandete, in Schiebrichtung verlaufende Führungen (20A, 20B) hat, zwischen denen die Abdeckplatte (8) in Montagestellung quer zur Schieberichtung (9) formschlüssig gehalten ist, dass jede dieser Führungen (20A, 20B) jeweils eine Reihe mit mehreren, vorzugsweise pilzförmig ausgestalteten Führungselementen aufweist, die in Schiebrichtung (9) zueinander beabstandet sind, dass die Führungselemente jeweils einen mit der Bodenplatte (6) verbunden Schaft und an ihrem von der Bodenplatte (6) entfernten Ende einen in Richtung auf die jeweils gegenüberliegende Führung (20B, 20A) vorstehenden Vorsprung haben, an dem die Abdeckplatte (8) in Montagestellung zur Auflage kommt.

8. Maschine (1) nach einem der Ansprüche 1 bis 7, **dadurch gekennzeichnet, dass** mindestens ein Maschinenfuß (3) an einer Trägerplatte (21) angeordnet ist, die einen ersten, mit dem Maschinengehäuse (2) verbunden Randbereich (22) und einen zweiten Randbereich (23) aufweist, der unterhalb der Unterseite der Bodenplatte (6) angeordnet und durch einen Schlitz (24) von dieser beabstandet ist, und dass die Abdeckplatte (8) in Montagestellung in den Schlitz (24) eingreift.

9. Maschine (1) nach einem der Ansprüche 1 bis 8, **dadurch gekennzeichnet, dass** an den Maschinenfüßen (3) Rollen und/oder Lenkrollen angebracht sind.

## Claims

1. Machine (1) for processing and/or producing food, having a machine housing (2) and machine feet (3) for setting up the machine (1) on the floor (4) of a room, wherein the machine housing (2) has a base plate (6) and side walls (5A, 5B, 5C) defining an interior cavity in which electrical and/or mechanical machine components are arranged, wherein the machine feet (3) are connected to the base plate (6) of the machine housing (2) in such a manner that said base plate is spaced apart from the floor (4) by a gap (7) when the machine (1) is set up on the floor (4), **characterized in that** on the underside of the base plate (6) facing away from the interior cavity of the machine housing (2), the machine (1) has a cover plate (8) that can be detachably connected to the machine housing (2), which cover plate covers the underside of the base plate (6) in planar fashion when it is connected to the machine housing (2).

2. Machine (1) according to Claim 1, **characterized in that** the machine (1) has a sensor for detecting the mounting position of the cover plate (8) and that the sensor is in control connection with a drive motor of the machine (1), in such a manner that operation of the drive motor is blocked when the cover plate (8) is not arranged in the mounting position.

3. Machine (1) according to Claim 1 or 2, **characterized in that** the cover plate (8) makes planar contact with the underside of the base plate (6) when the cover plate (8) is connected to the machine housing (2).

4. Machine (1) according to one of Claims 1 to 3, **characterized in that** the cover plate (8) is displaceable by means of a slide guide parallel to the extension plane of the base plate (6), relative thereto, between a mounting position, in which the cover plate (8) covers the underside of the base plate (6), and a pre-assembly position, in which the cover plate (8) exposes the underside of the base plate (6).

5. Machine (1) according to Claim 4, **characterized in that** a handle (11) is attached to an edge region (10) of the cover plate (8) that extends transversely to the sliding direction (9) of the slide guide, said handle (11) being positioned above the cover plate (8) in the mounting position of the cover plate (8) on an outer surface of a side wall (5B) of the machine housing (2) facing away from the interior cavity.

6. Machine (1) according to Claim 5, **characterized in that** on the side wall (5B) of the machine housing (2), where the handle (11) is positioned in the mounting position of the cover plate (8), a locking element (14) is arranged, which engages with the handle (11) when the cover plate (8) is in the mounting position.

7. Machine (1) according to one of Claims 4 to 6, **characterized in that** the slide guide has two guides (20A, 20B) spaced parallel to one another running in the sliding direction, between which the cover plate (8) is held in the mounting position in a form-fitting manner transversely to the sliding direction (9), that each of these guides (20A, 20B) has a row of multiple, preferably mushroom-shaped, guide elements that are spaced apart from one another in the sliding direction (9), that each of the guide elements has a shaft connected to the base plate (6) and a projection on their end remote from the base plate (6) that protrudes in the direction of the opposite guide (20B, 20A) in each case and against which the cover plate (8) rests in the mounting position.

8. Machine (1) according to one of Claims 1 to 7, **characterized in that** at least one machine foot (3) is arranged on a support plate (21) that has a first edge region (22) connected to the machine housing (2) and a second edge region (23) arranged beneath the underside of the base plate (6) and spaced apart therefrom by a slot 924), and that the cover plate (8) engages with the slot (24) in the mounting position.

9. Machine (1) according to one of Claims 1 to 8, **characterized in that** rollers and/or casters are attached to the machine feet (3).

## Revendications

1. Machine (1) de traitement et/ou de production d'aliments, ladite machine comprenant un boîtier de machine (2) et des pieds de machine (3) destinés à placer la machine (1) sur le sol (4) d'un local, le boîtier de machine (2) comportant une plaque de fond (6) et des parois latérales (5A, 5B, 5C) qui délimitent une cavité intérieure dans laquelle sont disposés des composants électriques et/ou mécaniques de la machine, les pieds de machine (3) étant reliés à la plaque de fond (6) du boîtier de machine (2) de manière à être espacés du sol (4) par un espace intermédiaire (7) lorsque la machine (1) est placée sur le sol (4),
**caractérisée en ce que** la machine (1) comporte sur la face inférieure de la plaque de fond (6), qui est opposée à la cavité intérieure du boîtier de machine (2), une plaque de recouvrement (8) qui peut être reliée de manière amovible au boîtier de machine (2) et qui recouvre de manière sensiblement bidimensionnelle la face inférieure de la plaque de fond (6) lorsqu'elle est reliée au boîtier de machine (2).

2. Machine (1) selon la revendication 1, **caractérisée en ce que** la machine (1) comporte un capteur destiné à détecter la position de montage de la plaque de recouvrement (8), et **en ce que** le capteur est relié par une liaison de commande à un moteur d'entraînement de la machine (1) de manière que le fonctionnement du moteur d'entraînement soit bloqué si la plaque de recouvrement (8) n'est pas disposée dans la position de montage.

3. Machine (1) selon la revendication 1 ou 2, **caractérisée en ce que** la plaque de recouvrement (8) vient en appui de manière sensiblement bidimensionnelle sur la face inférieure de la plaque de fond (6) lorsque la plaque de recouvrement (8) est reliée au boîtier de machine (2).

4. Machine (1) selon l'une des revendications 1 à 3, **caractérisée en ce que** la plaque de recouvrement (8) peut coulisser par rapport à la plaque de fond (6) parallèlement au plan d'extension de celle-ci au moyen d'un guidage coulissant entre une position de montage, dans laquelle la plaque de recouvrement (8) recouvre la face inférieure de la plaque de fond (6), et une position de pré-montage, dans laquelle la plaque de recouvrement (8) libère la face inférieure de la plaque de fond (6).

5. Machine (1) selon la revendication 4, **caractérisée en ce qu'**une poignée (11) est montée sur une région de bord (10) de la plaque de recouvrement (8) qui s'étend transversalement à la direction de coulissement (9) du guide coulissant, laquelle poignée est positionnée dans la position de montage de la plaque de recouvrement (8) au-dessus de la plaque de recouvrement (8) sur une surface extérieure, opposée à la cavité intérieure, d'une paroi latérale (5B) du boîtier de machine (2).

6. Machine (1) selon la revendication 5, **caractérisée en ce qu'**un élément d'encliquetage (14), qui est encliqueté avec la poignée (11) dans la position de montage de la plaque de recouvrement (8), est disposé sur la paroi latérale (5B) du boîtier de machine (2), sur laquelle la poignée (11) est positionnée dans une position de montage de la plaque de recouvrement (8).

7. Machine (1) selon l'une des revendications 4 à 6, **caractérisée en ce que** le guide coulissant comporte deux guides (20A, 20B) qui s'étendant parallèlement à distance l'un de l'autre dans la direction de coulissement et entre lesquels la plaque de recouvrement (8) est maintenue par complémentarité de formes dans la position de montage transversalement à la direction de coulissement (9), **en ce que** chacun de ces guides (20A, 20B) comporte une rangée de plusieurs éléments de guidage, de préférence en forme de champignon, qui sont espacés les uns des autres dans la direction de coulissement (9), **en ce que** les éléments de guidage comportent chacun un arbre qui est relié à la plaque de fond (6) et comportent à son extrémité opposée à la plaque de fond (6) une saillie qui s'étend en direction du guide opposé (20B, 20A) et sur laquelle la plaque de recouvrement (8) vient en appui dans la position de montage.

8. Machine (1) selon l'une des revendications 1 à 7, **caractérisée en ce qu'**au moins un pied de machine (3) est disposé sur une plaque de support (21) qui comporte une première zone de bord (22) reliée au boîtier de machine (2) et une deuxième zone de bord (23) qui est disposée sous la face inférieure de la plaque de fond (6) et qui est espacée de celle-ci par une fente (24), et **en ce que** la plaque de recouvrement (8) s'engage dans la fente (24) dans la position de montage.

9. Machine (1) selon l'une des revendications 1 à 8, **caractérisée en ce que** des galets et/ou des galets de direction sont montés sur les pieds (3) de la machine.
